# EUROPEAN PATENT APPLICATION

(11) **EP 3 949 756 A1**
(43) Date of publication of application: **09.02.2022**
(21) Application number: 21000206.9
(22) Date of filing: 28.07.2021
(51) Int. Cl.: A23L 13/00, A23L 13/40, A23L 3/3463, A23L 3/10, A23B 4/20, A23B 4/00

(54) **PACKAGED FOOD PRODUCT**

(30) Priority: 07.08.2020 ES 202031788 U; 28.08.2020 ES 202031901 U
(71) Applicant: Jamones Barquero, SL, 46170 Villar del Arzobispo (Valencia) (ES)
(72) Inventor: Barquero Ferrer, Simón, 46170 VILLAR DEL ARZOBISPO (VALENCIA) (ES)
(74) Representative: Botella Reyna, Juan

(57) **Abstract**

Packaged food product consisting of a container (1) in the form of a glass jar, with its corresponding openable lid (2), inside which are placed a number of slices (3) of cured ham and/or shoulder, which may be of white or Iberian pork, in the latter case in any of its Iberian pork variants, immersed in sunflower or olive oil (4). This product makes it possible to preserve the sliced ham and/or shoulder for a long period of time, with a structure that allows it to be consumed at room temperature so that its organoleptic characteristics are not diminished. The aforementioned package (1) can be of different sizes, with a capacity ranging from 300 grams to one kilogram of slices of cured ham and/or shoulder of white or Iberian pork.

## Description

### TECHNICAL FIELD

The present invention refers to a food product, specifically cured ham and/or cured shoulder of pork, which may be white or Iberian pork, in the latter case any of the four references or varieties according to the standard of the Iberian pig (Iberian fodder fed, Iberian free-range and fodder fed, acorn fed, and 100% Iberian acorn fed), which is marketed in a format hitherto unused in the field of cured ham and/or shoulder and Iberian ham and/or shoulder, which allows the sliced product to be conserved for a long period of time, all of this with a structure that allows it to be consumed at room temperature so that its organoleptic characteristics are not diminished.

### BACKGROUND INFORMATION ON THE INVENTION

In the practical field of application of the invention, that of cured hams and/or shoulders of white and Iberian pigs, when the product is sold sliced for direct consumption it must be kept refrigerated; otherwise, the product would spoil in a short time.

This means that the sliced product is consumed at a temperature much lower than room temperature, which reduces the organoleptic characteristics of the ham/shoulder; this is clearly undesirable.

Furthermore, this type of sliced products, if not completely consumed once opened, tend to oxidise, so that, even if the uneaten part is returned to the corresponding refrigerator, the product will have deteriorated when it is to be consumed again as a result of the aforementioned oxidation process.

This means that the packages of sliced cured white and Iberian pork ham and/or shoulder offered on the market are small, on the order of 100 to 150 grams, as these deteriorate once opened.

### DESCRIPTION OF THE INVENTION

The food product disclosed herein solves the above-mentioned problems in a fully satisfactory manner for the two aspects mentioned above, based on a simple but effective solution allowing the sliced ham and/or shoulder to be consumed at an ambient temperature, at which its organoleptic qualities are optimal and without any loss of these qualities, regardless of whether the product contained in the packaging is only consumed partially, in as many times as is deemed appropriate.

More specifically, the product of the invention consists of a glass container with its corresponding openable lid, inside which the cured ham and/or shoulder of white or Iberian pork is placed in slices previously cut and immersed in sunflower oil or olive oil.

This product format makes it easier to consume the contents at room temperature, an essential condition for enjoying the product's organoleptic characteristics to the full, since immersion in oil allows the product to be kept and conserved in a cool, dry place without the need for refrigeration; moreover, the product will maintain the same quality conditions regardless of how many times as the package is opened and closed, as long as the slices are covered by the aforementioned sunflower or olive oil, thus preventing oxidation.

As is evident, sunflower oil is an excellent natural preservative, so submerging food in oil forms a layer that insulates the food from oxygen and prevents oxidation and the growth of undesirable moulds and microorganisms.

Based on this fundamental principle of preventing and impeding the alteration of the normal characteristics and/or the decomposition of the product, together with that of improving the quality conditions for its consumption, the invention offers a product that provides greater convenience of consumption and storage, achieving a longer shelf life at room temperature (preferably from 15°C to 25°C) and, above all, the full preservation of the characteristics of the product contained in the package after it has been opened as many times as desired.

The invention makes it possible to proportionally distribute slices of each of the four parts of the ham and/or shoulder, thus offering the consumer, in a single package, the full range of contrasts in flavour and texture of the different parts of the same piece.

### BRIEF DESCRIPTION OF THE DRAWINGS

To complete the description made below and aid a better understanding of the features of the invention, according to a preferred example of embodiment thereof, the description is accompanied by a set of drawings that form an integral part of same and which, for purposes of illustration only and in a non-limiting sense, show the following:

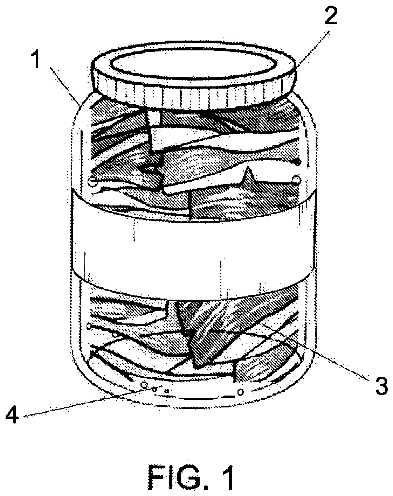

Figure 1 shows a perspective view of a food product based on ham and/or cured shoulder of white pig or Iberian pig, made in accordance with the object of the present invention.

### PREFERRED EMBODIMENT OF THE INVENTION

In view of the figure shown above, it can be seen that the product of the invention consists in a container (1) in the form of a glass jar, with its corresponding openable lid (2), a container that have different size formats, from 300 grams to one kilogram of net drained weight, so that a number of slices (3) of ham and/or cured shoulder of white or Iberian pork are placed inside, submerged in sunflower or olive oil (4).

Based on this structure, and as mentioned above, the product can be kept at room temperature in a cool, dry place, without the need for a refrigerator, significantly increasing the shelf life and optimising its consumption from the point of view of its organoleptic characteristics, since the taste of the product varies significantly depending on the temperature at which it is consumed. As mentioned above, the optimum temperature for consumption is precisely the temperature at which it is to be kept, i.e., room temperature.

Likewise, and as has also been mentioned above, the structure described allows the product to be consumed in as many times as desired, without opening the package resulting in the deterioration of the product contained inside, since the product always remains immersed in oil, which prevents it from oxidising.

## Claims

1. Packaged food product, **characterised in that** it consists of a container (1) in the form of a glass jar, with its corresponding openable lid (2), inside which are placed a number of slices (3) of cured ham and/or shoulder, which may be of white pork or Iberian pork, in the latter case in any of its Iberian pork variants, immersed in sunflower or olive oil (4).

2. Packaged food product, according to claim 1, **characterised in that** the package (1) can be of different sizes, with a capacity between 300 grams and one kilogram of slices of ham and/or cured shoulder of white or Iberian pork.
